# EUROPÄISCHE PATENTSCHRIFT

(11) **EP 1 125 975 B1**
(45) Veröffentlichungstag und Bekanntmachung des Hinweises auf die Patenterteilung: **08.09.2004**
(21) Anmeldenummer: 01102307.4
(22) Anmeldetag: 01.02.2001
(51) Int. Cl.: C08K 3/22, C08G 18/48

(54) **Gelmassen auf Basis von Reaktionsprodukten aus Polyolen und Polyisocyanaten**
Gel substances based on reaction products of polyols and polyisocyanates
Matières gélifiées à base de produits de réaction de polyols et de polyisocyanates

(30) Priorität: 08.02.2000 DE 10005495
(43) Veröffentlichungstag der Anmeldung: 22.08.2001
(73) Patentinhaber: TechnoGel GmbH & Co. KG, 37115 Duderstadt (DE)
(72) Erfinder: Nowak, Rüdiger, 63796 Kahl/Main (DE); Steinbach, Helmut, 45699 Herten (DE); Stender, Adolf, 37115 Duderstadt (DE)
(74) Vertreter: Läufer, Martina, Dr.

(56) Entgegenhaltungen:
- DE-A- 19 618 825
- US-A- 5 362 834
- US-A- 5 418 311

## Beschreibung

Die Erfindung betrifft Gelmassen auf Basis von Reaktionsprodukten aus Polyolen und Polyisocyanaten.

Gelmassen auf Basis von Reaktionsprodukten aus Polyolen und Polyisocyanaten (Polyurethane) werden in druckverteilenden Elementen zum Beispiel in Polstern für Rollstühle eingesetzt (EP 0 511 570 B1). Die bekannten Gelmassen können anorganische Füllstoffe, wie zum Beispiel Schwerspat, Kreide, Gips, Kieserit, Soda, Titandioxid, Quarzsand, Kaolin, Ruß oder Mikroglaskugeln, enthalten.

Die bekannten Gelmassen weisen den Nachteil auf, daß ihre mechanischen Eigenschaften wie zum Beispiel die mechanische Zugfestigkeit und Bruchdehnung nicht ausreichend sind.

Gegenstand der Erfindung sind Gelmassen auf Basis von Reaktionsprodukten aus Polyolen und Polyisocyanaten, welche dadurch gekennzeichnet sind, daß sie als Füllstoff mindestens ein pyrogen hergestelltes Oxid eines Metalls oder Metalloids enthalten.

Die pyrogen hergestellten Oxide können bevorzugt auf dem Wege der Flammenhydrolyse hergestellt werden.

Pyrogen hergestellte Oxide von Metallen und/oder Metalloiden sind bekannt aus Ullmanns Enzyklopädie der technischen Chemie 4. Auflage, Band 21, Seiten 464 (1982).

In einer Ausführungsform der Erfindung können die Gelmassen physikalische Gemische von pyrogen hergestellten Oxiden von Metallen und/oder Metalloiden enthalten.

Ebenso können die erfindungsgemässen Gelmassen auf pyrogenem Wege hergestellte Mischoxide von Metallen und/oder Metalloiden enthalten.

Erfindungsgemäß können beispielsweise die folgenden pyrogen hergestellten Oxide eingesetzt werden:

Siliciumdioxid, Aluminiumoxid, Mischoxid aus Siliciumdioxid und Aluminiumoxid, Titandioxid, Mischoxid als Titandioxid und Eisenoxid.

Erfindungsgemäß können auch pyrogen hergestellte Oxide, die oberflächenbehandelt sind, eingesetzt werden, wie zum Beispiel

Aerosil R 8200, Aerosil R972, Aerosil R974, Aerosil R805

Aerosil R 202, Aerosil R812. Diese Oxide sind in Schriftenreihe Pigmente Nio.27 (August 1993) Degussa AG beschreiben.

Als Oberflächenbehandlungsmittel können eingesetzt werden:

Dimethyldichlorsilan, Trimethyldichlorsilan, Hexamethyldisilazan, Polydimethylsiloxane, Alkylsilane wie zum Beipiel Trimethoxioctylsilan.

Insbesondere können die folgenden pyrogen hergestellen Oxide eingesetzt werden:

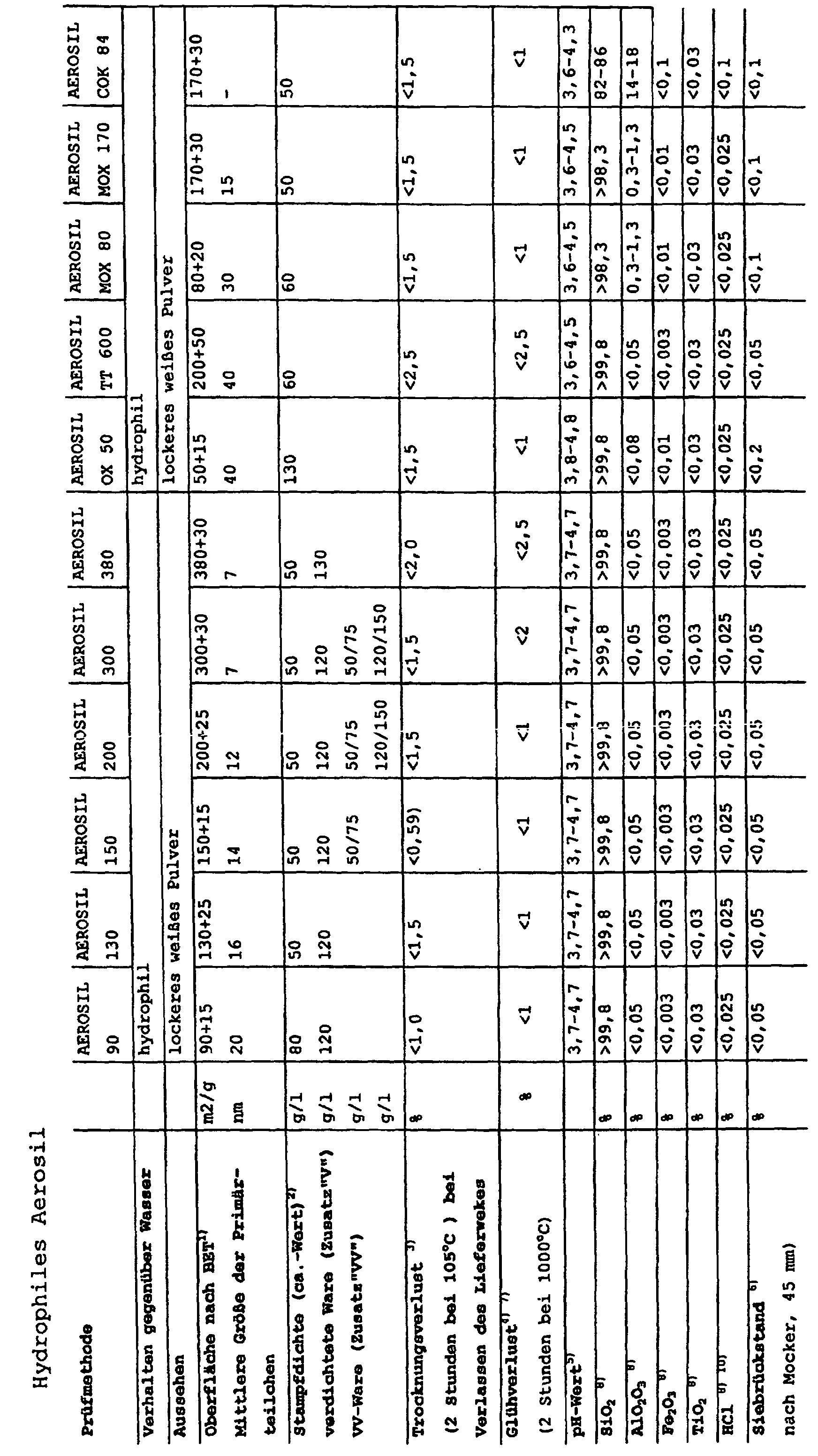

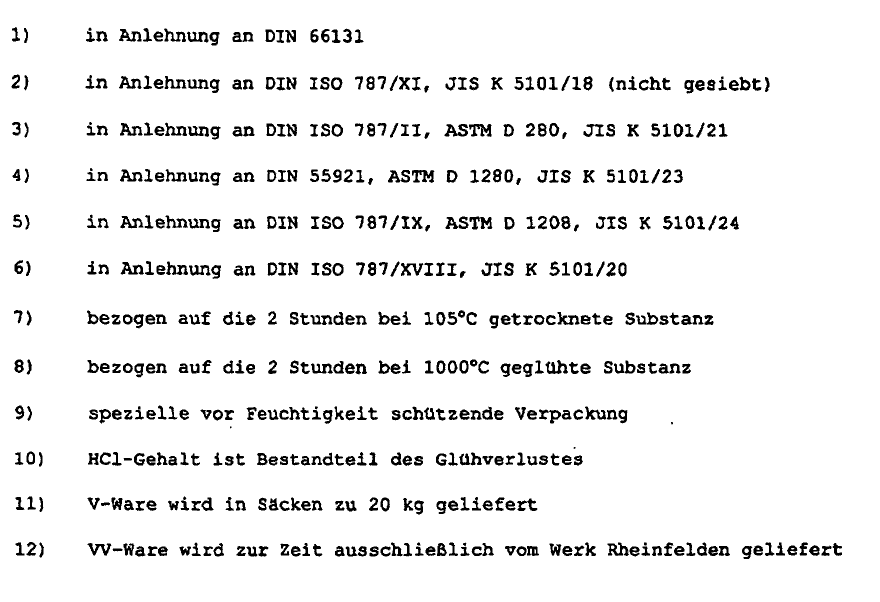

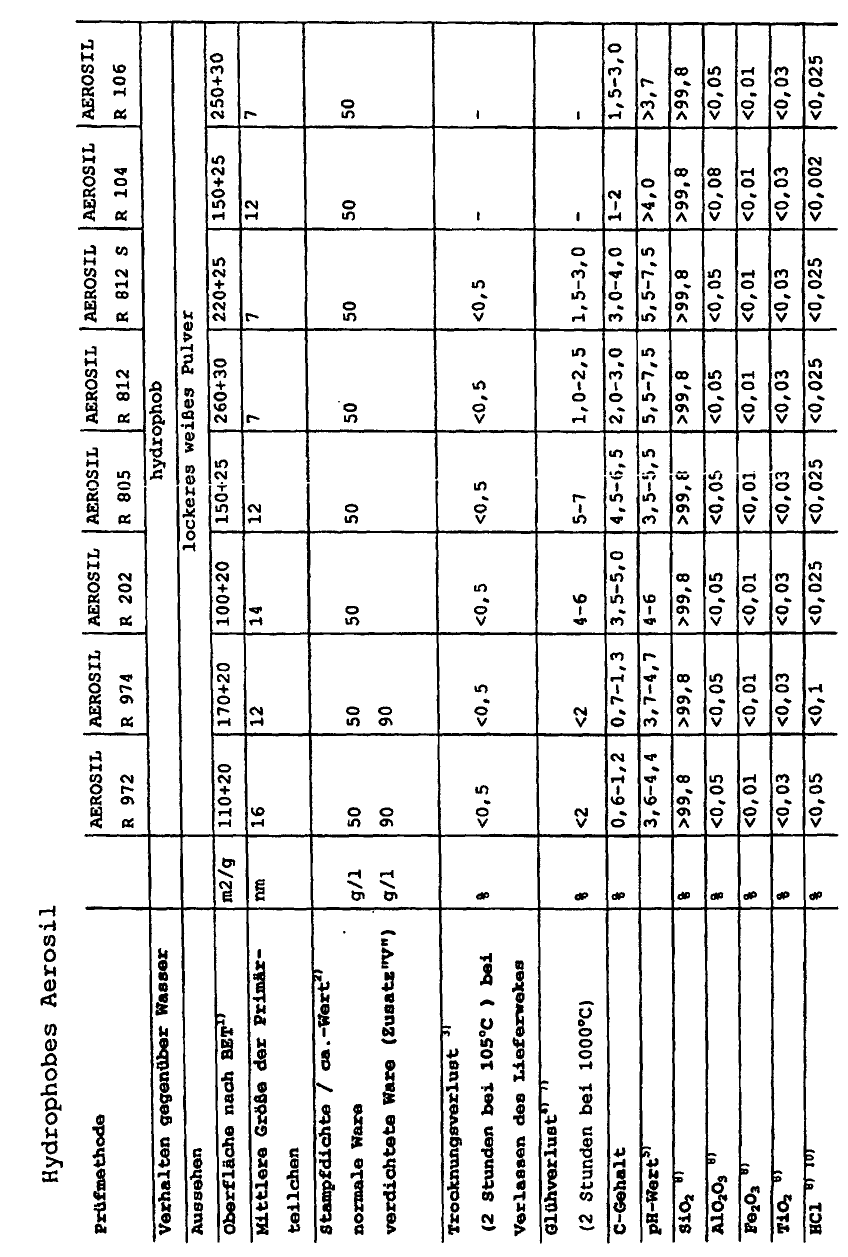

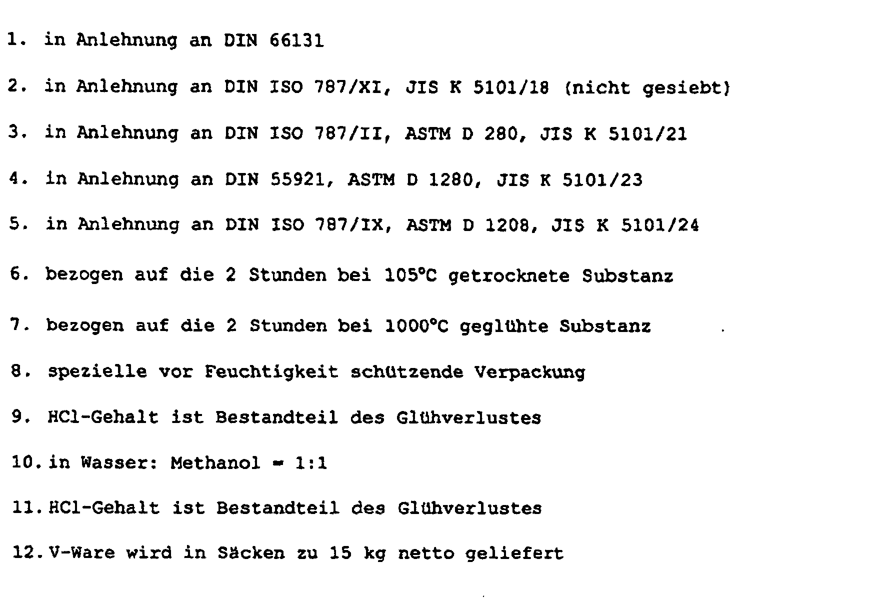

| | |
|---|---|
| **Eigenschaften** | **AEROSIL** **R 8200** |
| Verhalten gegenüber Wasser | hydrophob |
| Oberfläche nach BET m²/g | 160±25 |
| Stampfdichte g/l ca. | 140 |
| Trocknungsverlust ( 2 h bei 105°C) % | ≤ 0,5 |
| pH-Wert (4%ig in Wasser) | ≥ 5,5 |
| Kohlenstoffgehalt % | 2,0 - 4,0 |
| SiO₂ % | ≥ 99,8 |
| Fe₂O₃ % | ≤ 0,01 |
| TiO₂ % | ≤ 0,03 |
| HCl % | ≤ 0,025 |

Erfindungsgemäß einsetzbare Gelmassen auf Basis von Reaktionsprodukten aus Polyolen und Polyisocyanaten (Polyurethane) sind bekannt.

So beschreiben beispielsweise die Dokumente EP 0 511 570 B1, EP 0 057 838 und EP 0 057 839 B1 Gelmassen, die zur Herstellung der erfindungsgemäßen Gelmassen eingesetzt werden können.

Ein weiterer Gegenstand der Erfindung ist ein Verfahren zur Herstellung der erfindungsgemässen Gelmassen auf Basis von Reaktionsprodukten aus Polyolen und Polyisocyanaten, welches dadurch gekennzeichnet ist, daß man eine Mischung aus
a) einem oder mehreren Polyisocyanaten und
b) einer oder mehreren Polyolkomponenten und
c) mindestens einem pyrogen hergestellten Oxid eines Metalls oder Metalloids
gelieren läßt.

Das erfindungsgemäße Verfahren zur Herstellung der erfindungsgemäßen Gelmassen kann dadurch gekennzeichnet sein, dass das Produkt aus Isocyanat-Funktionalität und Funktionalität der Polyolkomponente mindestens 5,2, vorzugsweise mindestens 6,5, insbesondere mindestens 7,5 beträgt.

Die Polyolkomponente kann aus einem Gemisch aus
a) einem oder mehreren Polyolen mit Hydroxyzahlen unter 112 und
b) einem oder mehreren Polyolen mit Hydroxyzahlen im Bereich 112 bis 600 bestehen,
wobei das Gewichtsverhältnis der Komponente a) zu Komponente b) zwischen 90:10 und 10:90 liegt, die Isocyanat-Kennzahl des Reaktionsgemisches im Bereich von 15 bis 59,81 liegt und das Produkt aus Isocyanat-Funktionalität und Funktionalität der Polyolkomponente mindestens 6,15 beträgt.

Bei dem erfindungsgemäßen Verfahren kann man eine Mischung aus
a) einem oder mehreren Polyisocyanaten und
b) einer Polyolkomponente, bestehend aus
   - einem oder mehreren Polyolen (b₁) mit Hydroxyzahlen unter 112 und
   - einem oder mehreren Polyolen (b₂) mit Hydroxyzahlen im Bereich 112 bis 600 und
c) gegebenenfalls einem Katalysator für die Reaktion zwischen Isocyanat- und Hydroxylgruppen und
d) gegebenenfalls aus der Polyurethanchemie an sich bekannten Füll- und/oder Zusatzstoffen,
wobei das Gewichtsverhältnis der Komponente (b₁) zu Komponente (b₂) zwischen 90:10 und 10:90 liegt, die Isocyanat-Kennzahl des Reaktionsgemisches im Bereich von 15 bis 59,81 liegt und das Produkt aus Isocyanat-Funktionalität der Polyolkomponente mindestens 6,15 beträgt, gelieren lassen.

Die Polyolkomponente kann aus einem oder mehreren Polyolen mit einm Molekulargewicht zwischen 1000 und 12000 und einer OH-Zahl zwischen 20 und 112 bestehen, wobei das Produkt der Funktionalitäten der polyurethanbildenden Komponenten mindestens 5,2 beträgt und die Isocyanat-Kennzahl zwischen 15 und 60 liegt.

Als Isocyanate kann man solche der Formel

Q(NCO)ₙ

einsetzen, in der
n für 2 bis 4 steht und
Q einen aliphtischen Kohlenwasserstoffrest mit 8 bis 18 C-Atomen, einen cycloaliphatischen Kohlenwasserstoffrest mit 4 bis 15 C-Atomen, einen aromatischen Kohlenwasserstoffrest mit 6 bis 15 C-Atomen oder einen araliphatischen Kohlenwasserstoffrest mit 8 bis 15 C-Atomen bedeutet.

Gegebenenfalls kann die Mischung zusätzlich einen Katalysator für die Reaktion zwischen Isocyanat- und Hydroxylgruppen sowie die aus der Polyurethanchemie an sich bekannten weiteren Füll- und/oder Zusatzstoffe enthalten.

Die eingesetzten Polyole können primäre und/oder sekundäre Hydroxylgruppen aufweisen. Im Falle der Verwendung von Gemischen von Polyolen mit primären und sekundären Hydroxylgruppen ist feststellbar, daß bevorzugt die primären Hydroxylgruppen mit der Isocyanatkomponente reagieren. Für den Begrifff "Funktionalität der Polyolkomponente" könnten dann eventuell nur die primären Hydroxylgruppen der Polyolkomponente in Betracht gezogen werden. Zur Berechnung der Isocyanatkennzahl im Sinne der vorliegenden Erfindung sind jedoch jeweils die gesamten Hydroxylgruppen der Polyolkomponente heranzuziehen.

Bei der Herstellung der erfindungsgemäßen Gelmassen kann das Produkt aus Isocyanat-Funktionalität und Funktionalität der Polyolkomponente mindestens 6,15, vorzugsweise mindestens 6,5, insbesondere mindestens 7,5 betragen.

Die Polyolkomponente erfüllt neben der Funktion als Aufbaukomponente für die Polyurethanmatrix zusätzlich noch die Rolle eines Dispersionsmittels. Bei den erfindungsgemäß zu verwendenden Polyolen kann es sich vorzugsweise um in der Polyurethanchemie an sich bekannte, bei 10 bis 60 °C flüssige Polyhydroxy-polyester, -polyether, -polythioether, -polyacetale, -polycarbonate, -polyesteramide -polyamide oder -polybutadiene der oben angegebenen Hydroxylzahlenbereiche handelt.

Bei den Polyhydroxy-polyestern kann es sich zum Beispiel um Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren handeln. Anstelle der freien Polycarbonsäuren können auch die entsprechenden Polycarbonsäureanhydride oder entsprechenden Polycarbonsäureester von niederen Alkoholen oder deren Gemische zur Herstellung des Polyesters verwendet worden sein. Die Polycarbonsäuren können aliphathischer, cycloaliphatischer, aromatischer und/oder heterocyclischer Natur sein und gegebenenfalls , zum Beispiel durch Halogenatome, substituiert und/oder auch ungesättigt sein.

Als Beispiele für solche Carbonsäuren, deren Anhydride und deren Ester seien genannt: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanyhdrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren (gegebenenfalls in Mischung mit monomeren ungesättigten Fettsäuren zum Beispiel Ölsäure), Terephthalsäuredimethylester und Terephthalsäure-bisglykolester.

Als mehrwertige Alkohole kommem zum Beispiel Ethylenglykol, Propylenglykol-(1,2) und -(1,3), Butylenglykol-(1,4), -(1,3) und-(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpan, Hexantriol-(1,2,6), Butantriol-(1,2,4), Trimethylolethan, Pentaerythrit, Chinit, Mannit, Sorbit, Formit, Methylglykosid, Diethylenglykol, Triethylenglykol, höhere Polyethylenglykole, Dipropylenglykol, höhere Polypropylenglykole, Dibutylenglykol und höhere Polybutylenglykole in Frage. Die Polyester können anteilig endständige Carboxylgruppen aufweisen. Auch Polyester aus Lactonen zum Beispiel ε-Caprolacton, oder aus Hydroxycarbonsäuren, zum Beispiel ω-Hydroxycapronsäure, sind einsetzbar.

Bei den Polyhydroxy-polyethern kann es sich zum Beispiel um mindestens zwei, im allgemeinen zwei bis acht, vorzugsweise drei bis sechs Hydroxylgruppen aufweisende Polyether handeln. Solche Polyhydroxy-polyether sind an sich bekannt und können zum Beispiel hergestellt werden durch Polymerisation von Epoxiden wie Ethylenoxid, Propylenoxid, Butylenoxid, Tetrahydrofuran, Styroloxid und/oder Epichlorhydrin mit sich selbst, zum Beispiel in Gegenwart von Lewis-Katalysatoren wie BF₃, oder durch Anlagerung dieser Epoxide, vorzugsweise von Ethylenoxid und/oder Propylenoxid, beim Einsatz von zwei oder mehr Epoxiden im Gemisch oder nacheinander, an Starterkomponenten mit reaktionsfähigen Wasserstoffatomen, wie Wasser, Alkohole, Ammoniak oder Amine, zum Beispiel Ethylenglykol, Propylenglykol-(1,3), Propylenglykol-(1,2), Trimethylolpropan, Glycerin, Sorbit, 4,4'-Dihydroxy-diphenylpropan, Anilin, Ethanolamin oder Ethylendiamin. Auch Sucrosepolyether, wie sie zum Beisiel in der DE-AS 1 176 358 und der DE-AS 1 064 938 beschrieben werden, sowie auf Formit oder Formose gestartete Polyether (siehe DE-OS 2 639 083 und DE-OS 2 737 951), kommen in Frage.

Als Polyole sind auch OH-Gruppen aufweisende Polybutadiene geeignet.

Bei den Polyhydroxy-polythiothern sind insbesondere die Kondensationsprodukte von Thiodiglykol mit sich selbst und/oder mit anderen Glyklen, Dicarbonsäuren, Formaldehyd, Aminocarbonsäuren und/oder Aminoalkoholen von Interesse. Je nach den Co-Komponenten handelt es sich bei den Produkten zum Beispiel um Polythiomischether, Polythioetherester oder Polythioetheresteramide.

Als Polyhydroxy-polyacetale kommen zum Beispiel die aus Glykolen, wie Diethylenglykol, 4,4'-Dioxyethoxydiphenylmethan und Hexandiol mit Formaldehyd herstellbaren Verbindungen in Frage. Auch durch Polymerisation cyclischer Acetale, zum Beispiel Trioxan (siehe DE-OS 1 694 128), lassen sich für die vorliegende Erfindung geeignete Polyacetale herstellen.

Als Polyydroxy-polycarbonate kommen beispielsweise an sich bekannte Typen in Betracht, die zum Beispiel durch Umsetzung von Diolen wie Propandiol-(1,3), Butandiol-(1,4), Hexandiol-(1,6), Diethylenglykol, Triethylenglykol, Tetraethylenglykyol und/oder Thiodiglykol mit Diarylcarbonat, oder Phosgen hergestellt werden können, (siehe DE-AS 1 694 080, DE-AS 1 915 908, DE-AS 2 221 751 und DE-OS 2 605 024).

Bei den Polyhydroxyl-polyesteramiden und -polyamiden kann es sich zum Beispiel um die aus mehrwertigen gesättigten oder ungesättigten Carbonsäuren oder deren Anhydriden und mehrwertigen gesättigten oder ungesättigten Aminoalkoholen, Diaminen, Polyaminen und deren Mischung gewonnen, vorweigend linearen Kondensate handeln.

Auch bereits Urethan- oder Harnstoffgruppen enthaltende Polyhydroxylverbindungen sowie gegebenenfalls modifizierte natürliche Polyole, wie Rizinusöl, können in dem erfindungsgemäße Verfahren als Polyolkomponente eingesetzt werden.

Weiterhin können als Polyolkomponente gegebenenfalls Polyhydroxylverbindungen eingesetzt werden, in welchen hochmolekulare Polyaddukte, Polykondensate oder Polymerisate in feindisperser oder gelöster Form enthalten sind. Derartige Polyhydroxylverbindungen können zum Beispiel erhalten werden, wenn man Polyadditionsreaktionen (zum Beispiel Umsetzungen zwischen Polyisocyanaten und aminofunktionellen Verbindungen) oder Polykondensationsreaktionen (zum Beispiel zwischen Formaldehyd und Phenolen und/oder Aminen) in situ in den oben genannten Hydroxylgruppen aufweisenden Verbindungen ablaufen läßt derartige Verfahren sind beispielsweise in der DE-AS 1 168 075, DE-AS 1 260 142 und den DE-Offenlegungsschriften 2 324 134, 2 423 984, 2 512 385, 2 513 815, 2550 797, 2 550 833, 2 550 862, 2 633 293 und 2 639 254 beschrieben. Es ist auch möglich , hochmolekulare Polyaddukte, Kondensate oder Polymerisate enthaltende Polyhydroxylverbindungen einzusetzen, die erhalten werden, indem man eine wäßrige Polymerdispersion mit einer Polyhydroxylverbindung vermischt und anschließend aus dem Gemsich das Wasser entfernt (siehe US-PS 3 869 413 und DE-OS 2 550 860).

Auch durch Vinylpolymerisate modifizierte Polyhydroxylverbindungen, wie sie zum Beispiel durch Polymerisation von Styrol und Acrylnitril in Gegenwart von Polyethern (siehe US-Patentschriften 3 383 351, 3 304 273, 3 523 093 und 3 110 695, sowie DE-AS 1 152 536) oder Polycarbonatpolyolen (siehe DE-PS 1 769 795 und US-PS 3 637 909) erhalten werden können, sind für das erfindungsgemäße Verfahren als Polyolkomponente geeignet. Bei Verwendung von Polyetherpolyolen, die gemäß den DE-Offenlegungsschriften 2 442 101, 2 644 922 und 2 646 141 durch Pfropfpolymerisation mit Vinylphosphonsäureestern sowie gegebenenfalls (Meth)acrylamid oder OH-funktionellen (Meth) acrylsäureestern modifiziert wurden, erhält man Gelmassen mit besonders ausgeprägter Flammwidrigkeit.

Erfindungsgemäß einzusetzende Polyolkomponenten sind zum Beispiel in High Polymers, Vol. XVI, "Polyurethanes, Chemistry and Technology", verfaßt von Saunders-Frisch, Interscience Publishers, New Yourk-London, Band I, (1962), Seiten 32-42 und Seiten 44-54 und Band II, (1964), Seiten 5-6 und 198-199, sowie im Kunststoff-Handbuch, Band VII, Vieweg-Höchtlen, Carl-hanser-Verlag, München (1966), zum Beispiel auf den Seiten 45-71, beschrieben. Selbstverständlich können auch Mischungen der obengenannten Verbindungen, zum Beispiel Mischungen von Polyethern und Polyestern, eingesetzt werden.

Bevorzugt werden erfindungsgemäß die in der Polyurethan-Chemie an sich bekannten Polyxydroxypolyether der genannten Art mit 2 bis 8, bevorzugt 3 bis 6 Hydroxylgruppen pro Molekül als Polyolkomponente eingesetzt. Besonders bevorzugt sind dabei, gegebenenfalls als Abmischungskomponente mit anderen Polyethern, solche, die zumindest endständig Ethylenoxideinheiten und damit primäre Hydroxylgruppen aufweisen. Der Anteil an Ethylenoxidsequenzen in erfindungsgemäß einzusetzenden Polyethern beträgt vorzugsweise mindestens 15 Gew.-%, besonders bevorzugt mindestens 20 Gew.-%.

Für die erfindugsgemäße Herstellung von Gelmassen können als Polyisocyanate zum Beispiel aliphatische, cycloaliphatische, araliphatische, aromatische und/oder heterocyclische Polysocyanate eingesetzt werden, wie sie zum Beispiel von W. Siefken in Justus Liebigs Annalen der Chemie, 562, Seiten 75 bis 136, beschrieben werden, beispielsweise solche der Formel

Q(NCO)ₙ

in der
n für 2 bis 4, vorzugsweise 2, steht
und
- Q: einen aliphatischen Kohlenwasserstoffrest mit 2 bis 18, vorzugsweise 6 bis 10 C-Atomen,
- einen: cycloaliphatischen Kohlenwasserstoffrest mit 4 bis 15, vorzugsweise 5 bis 10 C-Atomen
- einen: aromatischen Kohlenwasserstoffrest mit 6 bis 15, vorzugsweise 6 bis 13 C-Atomen
oder einen araliphatischen Kohlenwasserstoffrest mit 8 bis 15, vorzugsweise 8 bis 13 C-Atomen
bedeutet.

Als Einzelverbindungen dieser Art seien genannt:

Ethylen-diisocyanat, 1,4-Tetramethylendiisocyanat, 1,6-Hexamethylendiisocyanat, 1,12-Dodecandiisocyanat, Cyclobutan-1,3-diisocyanat, -1,4-diisocyanat Cyclohexan-1,3- und und beliebige Gemische dieser Isomeren, 1-Isocyanato-3,3,5-trimethyl-5-isocyanatomethyl-cyclohexan (DE-AS 1 202 785 und US-PS 3 401 190), 2,4- und 2,6-Hexahydrotoluylendiisocyanat und beliebige Gemische dieser Isomeren, Hexahydro-1,3 und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat und beliebige Gemische dieser Isomeren, Diphenylmethan-2,4'-und/oder-4,4'-diisocyanat und Naphthylen-1,5-diisocyanat.

Ferner kommen beispielsweise in Frage:

Triphenylmethan-4,4',4'' triisocyanat, Polyphenylpolymethylen-polyisocyanate, wie sie durch Anilin-Formaldehyd-Kondensation und anschließende Phosgenierung erhalten und zum Beispiel in der GB-PS 874 430 und der GB-PS 848 671 beschrieben werden, m- und p-Isocyanatophenylsulfonylisocyanate (siehe US-PS 3 277 138), Carbodiimidgruppen aufweisende Polyisocyanate (siehe DE-PS 1 092 007, US-PS 3 152 162 und DE-Offenlegungsschriften 2 502 400,2 537 685 und 2 552 350), Norbornan-Diisocyanate (gemäß US-PS 3 492 330), Allophanatgruppen aufweisende Polyisccyanate (siehe GB-PS 994 890, BE-PS 761 626 und NL-Patentanmeldung 71 02 524), Isocyanuratgruppen aufweisende Polyisocyanate (siehe US-PS 3 01 973, DE Patentschriften 1 022 789, 1 222 067 und 1 027 394, DE-OS 1 929 034 und DE-OS 2004 048), Urethangruppen aufweisende Polyisocyanate (siehe BE-PS 752 261, US-PS 3 394 164 und US-PS 3 644 457) acylierte Harnstoffgruppen aufweisende Polyisocyanate (siehe DE-PS 1 230 778), Biuretgruppen aufweisende Polyisocyanate (siehe US-Patentschriften 3124 605 und 3 201 372 und GB-PS 889 050), durch Telomerisationsreaktionen hergestellte Polyisocyanate (siehe DE-PS 3 654106). Estergruppen aufweisende Polyisocyanate (siehe GB Patentschriften 965 474 und 1 072 956, US-PS 3 567 763 und DE-PS 1 231 688), Umsetzungsprodukte der obengenannten Isocyanate mit Acetalen (siehe DE-PS 1 072 385) und polymere Fettsäureester enthaltende Polyacetale (siehe US-PS 3 455 883).

Es ist auch möglich, die bei der technischen Isocyanatherstellung anfallenden, Isocyanatgruppen aufweisenden Destillationsrückstände, gegebenfalls gelöst in einem oder mehreren der vorgenannten Polyisocyanate, einzusetzen. Ferner ist es möglich, beliebige Mischungen der vorgenannten Polyisocyanate zu verwenden.

Bevorzugte Isocyanate sind zum Beispiel das 2,4- und 2,6-Toluylendiisocyanat und beliebige Gemische dieser Isomeren. Polyphenyl-polymethylen-polyisocyanate, wie durch Anilin-Formaldehyd-Kondensation und anschließende Phosgenierung hergestellt werden können und Carbodiimidgruppen, Urethangruppen, Allophanatgruppen, Isocyanuratgruppen, Harnstoffgruppen oder Biuretgruppen aufweisende Polyisocyante.

Besonders bevorzugte Polyisocyanate sind biuretisiertes oder trimerisiertes 1,6-Hexamethylendiisocyanat, durch Tripropylenglykol modifiziertes Diphenylmethan-4,4'diisocyanat. Mischungen aus Polyphenylpolymethylenpolisocyanaten und Diphenylmethan-2,4'- und -4,4-diisocyanat, Mischungen aus Polyhenylpolymethylenpolyisocyanaten und Diphenylmethan 2,4' und -4,4'-diisocyanaten, wobei vorzugsweise der Zweikernanteil über 70 Gew.-% beträgt und gleichzeitig der Gehalt an 2,4'-Isomeren über 30% liegt.

Der Gehalt an Polyisocyanaten in den erfindungsgemäßen für Gelmassen herzustellenden Mischungen beträgt beispielsweise 5 bis 50 Gew.-%, vorzugsweise 9 bis 35 Gew.-%, bezogen auf das Gesamtgewicht der Polyokomponente und der Polyisocyanate.

Die an sich langsam ablaufende Gelbildungsreaktion kann gegebenenfalls durch Zusatz von Katalysatoren beschleunigt werden. Dabei können an sich bekannte, die Reaktion zwischen Hydroxyl- und Isocyanatgruppen beschleunigenden Katalysatoren verwendet werden, zum Beispiel tertiäre Amine, wie Triethylamin, Tributylamin, N-Methyl-morpholin, N-Ethyl-morpholin, N,N,N,N-Teramethyl-ethylendiamin, 1,4-Diaza-bicyclo-(2,2,2)-octan, N-Methyl-N-dimethylaminoethylpiperazin, N,N-Dimethylbenzylamin, Bis-(N,N-diethylaminoethyl)adipat, Pentamethyldiethylentriamin, N,N-Dimethylcyclohexylamin, N,N,N',N'-Tetramethyl-1,3-butandiamin, N,N-Dimethyl-β-phenylethylamin, 1,2-Dimethylimidazol und 2-Methylimidiazol. Als Katalysatoren kommen auch an sich bekannte Mannichbasen aus sekundären Aminen, wie Dimethylamin und Aldhyden, vorzugsweise Formaldehyd oder Ketonen wie Aceton , Methylethylenketon oder Cyclohexanon und Phenolen, wie Phenol, Nonylphenol oder Bisphenolen in Frage.

Als Katalysatoren kommen ferner Silaamine mit Kohlenstoff-Silizium-Bindungen (siehe zum Beispiel DE-PS 1 229 290 und US-PS 3 620 984) in Frage, zum Beispiel 2,2,4-Trimethyl-2-silamorpholin und 1,3-Diethylaminomethyl-tetramethyldisiloxan.

Als Katalysatoren kommen auch stickstoffhaltige Basen wie Tetralkylammoniumhydroxide, Alkalihydroxide wie Natriumhydroxid, Alkaliphenolate wie Natriumphenolat oder Alkalialkoholate wie Natriummethylat in Betracht. Auch Hexahydrothiazine können als Katalysatoren eingesetzt werden.

Außerdem sind auch organische Metallverbindungen, insbesondere organische Zinnverbindungen als Katalysatoren geeignet. Als organische Zinnverbindungen sind Zinn(II)-salze von Carbonsäuren wie Zinn(II)-acetat, -octoat, -ethylhexoat und Zinn(V)-Verbindungen, z. B. Dibutylzinn(IV)-oxid,chlorid, -acetat, -dilaurat, -maleat oder Dioctylzinnacetat bevorzugt.

Weitere Katalysatoren, sowie Einzelheiten über die Wirkungsweise der Katalysatoren sind im Kunststoff-Handbuch Band VII, herausgegeben von Vieweg und Höchtlen, Carl-Hanser-Verlag München 1966, z. B. auf den Seiten 96-102 beschrieben. Es können auch Gemische verschiedener Katalysatoren verwendet werden.

Die Katalysatoren können z. B. in einer Menge von 0,01 bis 10 Gew.-%, bezogen auf das Gesamtgewicht des Gemisches zur Gelmassen-Herstellung eingesetzt werden.

Bei den in den erfindungsgemäßen Gelmassen gegebenenfalls enthaltenen, aus der Polyurethan-Chemie an sich bekannten Füll- und/oder Zusatzstoffen kann es sich zum Beispiel um anorganische und/oder organische Füllstoffe, färbende Agenzien, wasserbindende Mittel, oberflächenaktive Substanzen, Pflanzenschutzmittel, Streckmittel und/oder Weichmacher handeln.

Weitere anorganische Füllstoffe können zum Beispiel sein: Schwerspat, Kreide, Gips, Kieserit, Soda, Titanoxid, Quarzsand, Kaolin, Ruß, Mikroglaskugeln. Organische Füllstoffe können zum Beispiel sein: Pulver auf Basis von Polystyrol, Polyvinylchlorid, Harnstoff-Formaldehyd-Massen und/oder Polyhydrazodicarbonamiden (z. B. aus Hydrazin und Toluylendiisocyanat erhaltene). Dabei können zum Beispiel Harnstoff-Formaldehyd-Harze oder Polyhydrazodicarbonamide direkt in einem für die erfindungsgemäße Gelmassen-Herstellung zu verwendenden Polyole hergestellt worden sein. Es können auch Mikrohohlkugeln organischer Herkunft zugefügt werden.

Anorganische und/oder organische Füllstoffe können auch in Form von Kurzfasern eingesetzt werden. Als Kurzfasern kommen zum Beispiel Glasfasern und/oder Fasern organischer Herkunft zum Beispiel Polyester- oder Polyamidfasern infrage. Die Kurzfasern können zum Beispiel 0,01 bis 1 cm lang sein. Anorganische Füllstoffe können auch Metallpulver sein, z. B. Eisen- oder Kupferpulver.

Als färbende Agenzien können erfindungsgemäße Gelmassen zum Beispiel für die Einfärbung von Polyurethan an sich bekannte Farbstoffe und/oder Farbpigmente auf organischer und/oder anorganischer Basis enthalten, beispielsweise Eisenoxid- und/oder Chromoxidpigmente und Pigmente auf Phtalocyanin- und/oder Monoazo-Basis.

Als wasserbindende Mittel kommen vorzugsweise Zeolithe infrage. Geeignete synthetische Zeolithe sind zum Beispiel unter der Bezeichnung Baylith® im Handel.

Als oberflächenaktive Substanzen seien zum Beispiel Cellulosepulver, Aktivkohle und Kieselsäurepräparate genannt. Als Flammschutzmittel können beispielsweise Natriumpolymetaphosphate oder Aminophosphate, zum Beispiel Melaminphosphate zugesetzt werden.

Als Streckmittel kommen insbesondere flüssige, praktisch inerte Substanzen infrage, die einen Siedepunkt von über 150°C (bei Normaldruck) aufweisen. Beispielsweise seien genannt: Alkyl-, alkoxy- und/oder halogensubstituierte aromatische Verbindungen wie Dodecylbenzol, m-Dipropoxylbenzol und/oder o-Dichlorbenzol, halogenierte aliphatische Verbindungen wie chlorierte Paraffine, organische Carbonate wie Propylencarbonat, Carbonatsäureester wie Dioctylphthalat sowie Dodecylsulfonsäureester und organische Phosphorverbindungen, wie Trikresylphosphat.

Als Weichmacher seinen beispielsweise Ester von mehrwertigen, vorzugsweise zweiwertigen Carbonsäuren mit einwertigen Alkoholen genannt. Die Säurekomponente solcher Ester kann sich zum Beispiel herleiten von Bernsteinsäure, Isophpthalsäure, Trimelitsäure, Phthalsäureanhydrid, Tetra- und/oder Hexadrophthalsäureanydrid, Endomethylentetrahydrophthalsäureanhydrid, Glutarsäureanhydrid, Maleinsäureanhydrid, Fumarsäure und/oder dimeren und/oder trimeren Fettsäuren wie Ölsäure, gegebenenfalls in Mischung mit monomeren Fettsäuren. Die Alkoholkomponente solcher Ester kann sich zum Beispiel herleiten von verzweigten und/oder aliphatischen Alkoholen mit 1 bis 20 C-Atomen, wie Methanol, Ethanol, Propanol, Isopropanol. n-Butanol, sek.-Butanol, tert.-Butanol, den verschiedenen Isomeren des Pentylalkohols, Hexylalkohols, Octylalkohols (zum Beispiel 2-Ethyl-Hexanol), Nonylalkohols, Decylalkohols, Decylalkohols. Laurylalkohols, Myristylalkohols, Cetylalkohols, Stearylalkohol und/oder von natürlich vorkommenden oder durch Hydrierung natürlich vorkommender Carbonsäuren erhältlichen Fett- und Wachsalkoholen. Als Alkoholkomponente kommen auch cycloaliphatische und/oder aromatische Hydroxyverbindungen infrage, beispielsweise Cyclohexanol und dessen Homologe, Phenol, Kresol, Thymol, Carvacrol, Benzylalkohol und/oder Phenylethanol.

Als Weichmacher kommen außerdem Ester der obengenannten Alkohole mit Phosphorsäure in Frage. Gegebenenfalls können auch Phosphorsäureester aus halogenierten Alkoholen, wie zum Beispiel Trichlorethylphosphat, eingesetzt werden. Im letzteren Fall kann gleichzeitig mit dem Weichmacher-Effekt ein flammhemmender Effekt erzielt werden. Selbstverständlich können auch gemischte Ester der obengenannten Alkohole und Carbonsäuren eingesetzt werden.

Bei den Weichmachern kann es sich auch um sogenannte polymere Weichmacher handeln, zum Beispiel um Polyester der Adipin-, Sebacin- und/oder Phthalsäure.

Weiter sind auch Alkylsulfonsäureester des Phenols, z. B. Paraffinsulfonsäurephenylester, als Weichmacher verwendbar.

Der Gehalt an Füll- und/oder Zusatzstoffen kann in den erfindungsgemäßen Gelmassen und bei deren Herstellung zum Beispiel insgesamt bis zu 70 Gew.-%, bezogen auf das Gesamtgewicht der Gelmasse, betragen.

Bei einer besonderen Ausführungsform der erfindungsgemäßen Herstellung von Gelmassen kann Luft oder ein anderes Gas in das Reaktionsgemisch eingepreßt oder eingerührt werden, beispielsweise in einer Menge von bis zu 60 Vol.-%, bezogen auf das Gelvolumen. Die auf diese Weise hergestellten Gelmassen zeichnen sich durch ein geringeres Gewicht aus.

Die erfindungsgemäßen Gelmassen können z. B. in Form von zwei- beziehungsweise dreidimensionalen Konturteilen verwendet werden. Dazu ist es im allgemeinen erforderlich, die Gelmassen mit einer teilweisen, einseitigen oder allseitigen Beschichtung, Abdeckung oder Umhüllung zu versehen.

Die Anwendungen, bei denen die gezielt einstellbare Haftfähigkeit der Gelmassen genutzt werden soll, zum Beispiel bei Auflagen auf menschliche oder tierische Körperoberflächen, ist nur eine teilweise oder einseitige Beschichtung oder Abdeckung erforderlich. Dies ist insbesondere bei Abwendung für den einmaligen Gebrauch der Fall.

Eine allseitige, das heißt vollständige Umhüllung der Gelmasse ist bei vielen Anwendungen aus hygienischen Gründen erforderlich. Um die besonderen Eigenschaften, wie zum Beipiel Abbau von Scherkräften, Druck- und Stoßabsorption, hohe Flexibilität der Gelmassen möglichst weitgehend zu erhalten, ist es vorteilhaft,hierzu elastische, dehnfähige Umhüllungsmaterialien zu verwenden. Hierfür kommen insbesondere elastische Folien infrage, zum Beispiel Polymerfolien mit gutem zähelastischen Verhalten (gemessen beispielsweise im biaxalen Durchstoßversuch nach DIN 55 373) und hoher Reißdehnung und Reißkraft (gemessen beispielsweise nach DIN 53 455).

Solche Folien können beispielsweise Polyurethanfolien sein wie sie unter den Handelsnamen Walopur® von der Firma Wolff-Walsrode und Platinol® von der Firma Plate angeboten werden. Geeignete Folien können auch aus thermoplastischen Polyestelastomeren (zum Beispiel Hytrel® der Firma DuPont) oder aus auf Styrol und Butadien basierenden Blockcopolymerisaten, gegebenenfalls in Abmischung mit Polyolefinen, herstellt worden sein. Geeignete auf Styrol basierende Blockcopolymere sind beispielsweise die unter dem Handelsnamen Cariflex® von der Firma Shell angebotenen Produkte. Geeignet sind außerdem Styrol-Ethylen-Butylen-Styrol-Blockopolymere werden zum Beispiel von der Firma Shell unter dem Handelsnamen Kraton® angeboten. Geeignete Folien sind weiterhin solche aus Ethylen-Vinylacetat-Polymeren, gegebenenfalls im Verbund mit anderen Polymerfolien, sowie dünne Filme aus natürlichen oder synthetischen Kautschukmaterialien. Auch die Verwendung von Folien aus weichgemachten Polyvinylchlorid ist möglich.

Diese Folien lassen sich thermisch verformen, schweißen oder kleben. Es ist daher besonders einfach, aus diesen Folien geeignete Hüllen herzustellen, die erfindungsgemäße Gelmassen enthalten.

In einer besonderen Ausführungsform können auch Hüllen für erfindungsgemäße Gelmassen erhalten werden, indem auf tiefgezogene Artikel aus den genannten Folien eine Deckfolie aufgeschweißt oder aufgeklebt wird oder zwei tiefgezogene Halbschalen aus diesen Folien aneinandergeklebt oder geschweißt werden.

Geeignet als Hüllen sind auch beschichtete elastische textile Flächengebilde wie Gewebe, Gewirke, Gestricke oder Vliese aus natürlichen oder synthetischen organischen oder anorganischen Fasermaterialien mit elastischem Charakter, die eine hohe Reißdehnung und Reißkraft (nach DIN 53 455) aufweisen. Geeignete Beschichtungen für solche elastischen textilen Flächengebilde sind zum Beispiel elastische Polyurethanbeschichtungen, wie sie zum Beispiel von der BAYER AG unter der Bezeichnung Impranil® angeboten werden. Es sind auch Beschichtungen auf Basis von weichgemachten Polyvinylchlorid möglich.

Solche beschichteten textilen Flächengebilde lassen sich vernähen, kleben oder schweißen. Es ist daher besonders einfach, aus beschichteten textilen Flächengebilden geeignete Hüllen für die erfindungsgemäßen Gelmassen herzustelen.

Die Umhüllung der erfindungsgemäßen Gelmassen kann auch erfolgen, indem man auf die Oberfläche der Gelmasse ein flüssiges oder gelöstes Material aufträgt, das dort zu einem elastischem Material erstarren oder dort einem anderem filmbildenden Prozeß unterworfen werden kann. Besonders geeignet sind hierfür Beschichtungsmaterialien auf Polyurethanbasis, wie sie beispielsweise von der BAYER AG unter dem Namen Impranil® angeboten werden, die dann in Lösung oder als Dispersion auf eine erfindungsgemäße Gelmasse aufgebracht werden können und nach Entfernung des Lösungs- oder Dispersionsmittels eine geeignete elastische Umhüllung ergeben.

Geeignete flexible Umhüllungen können auch erhalten werden, wenn man die Gelmasse mit einem polyurethanbildenden Zweikomponentenlack überzieht.

Die erfindungsgemäße Herstellung von Gelmassen kann auf verschiedene Weise erfolgen.

Man kann beispielsweise nach dem one-shot- oder den Prepolymer-Verfahren arbeiten. Beim one-shot-Verfahren werden alle Komponenten, zum Beispiel Polyisocyanate, gegebenenfalls Katalysator und gegebenenfalls Füll- und/oder Zusatzstoffe auf einmal zusammengegeben und intensiv miteinander vermischt.

Beim Prepolymer-Verfahren sind zwei Arbeitsweise möglich. Entweder stellt man zunächst ein Isocyanat-Prepolymer her, indem man einen Teil der Polyolmenge mit der gesamten, für die Gelbildung vorgesehenen Polyisocyanatmenge umsetzt, und fügt dann dem erhaltenen Prepolymer die restliche Menge an Polyol sowie gegebenenfalls Katalysator, Füll- und/oder Zusatzstoffen zu und mischt intensiv. Man kann auch zunächst die gesamte, für die Gelbildung vorgesehene Menge an Polyol mit einem Teil der Polyisocyanatmenge zu einem Hydroxyl-Prepolymer umsetzen und anschließend die restliche Menge an Isocyanat und die gegebenenfalls einzusetzenden Komponenten zumischen.

Besonders vorteilhaft ist eine Variante des one-shot-Verfahrens in Kombination mit dem Hydroxyl-Prepolymer-Verfahren. Hierbei wird das Polyolgemisch, gegebenenfalls der Katalysator und/oder die Füll- und/oder Zusatzstoffe und zwei verschiedene Polyisocyanate auf einmal zusammengegeben und intensiv vermischt. Eines der Polyisocyanate ist dabei aromatisch, das andere aliphatisch. Wegen der stark unterschiedlichen Reaktivität dieser beiden Polyisocyanattypen entsteht dann zunächst ein Hydroxyprepolymer aus dem gesamten Polyol und dem reaktivieren Polyisocyanat,das dann im allgemeinen innerhalb weniger Minuten mit dem weniger reaktionsfähigen Polyisocyanat unter Gelbildung reagiert. Hierbei werden Gelmassen mit besonders hohen Zähigkeiten erhalten.

Bei allen diesen Arbeitsweisen kann die Förderung, Dosierung und Mischung von Einzelkomponenten oder Komponentgemischen mit den in der Polyurethan-Chemie an sich bekannten Vorrichtungen erfolgen.

Die Herstellung von Elementen, die erfindungsgemäße Gelmassen enthalten, kann auf verschiedene Weise erfolgen. Man kann beispielsweise zunächst die Gelmassen in einer Form herstellen und die nach Ausreaktion formstabile Gelmasse mit einer flexiblen Folie oder einem flexiblen Stoff umhüllen oder lackieren oder beschichten. Man kann auch nach einer besonders bevorzugten, sehr einfachen Verfahrensweise so vorgehen, daß die zur Herstellung der Gelmasse erforderlichen Komponenten mit einen mechanischen Mischer gemischt und die Mischung direkt in eine Hülle aus elastischer, flexibler Folie oder einem elastischen beschichteten textilen Flächengebilde gegossen wird.

Nach Zugabe der Mischung kann die Hülle dicht verschlossen und die Gelbildung darin sich selbst überlassen werden. Gegebenenfalls kann die Hülle während der Gelbildung zwischen zwei planparallelen Platten oder in eine andere Form gebracht werden. Dann entsteht ein gelenthaltendes Bauteil mit im wesentlichen paralleler Ober- und Unterseite oder einer Gestalt entsprechend der Innenseite der verwendeten Form. Je nach Art der Reaktionskomponenten, zugegebenen Katalysatoren und Temperaturführung kann die Zeit bis zur Beendigung der Gelbildung beispielsweise 1 Minute bis 12 Stunden betragen. Die Temperatur der eingesetzten Komponenten liegt vorzugsweise bei 10 bis 60°C.

Diese besonders bevorzugte Verfahrensweise erlaubt die Herstellung von Elementen beliebiger Größe und Form in einfacher Weise dadurch, daß man die Hüllen in allgemein bekannter Weise in der entsprechenden Form herstellt und mit der gebildeten Masse füllt. Besonders bevorzugte Formen und Größen sind quadratische und rechteckige Kissen mit einer Kantenlänge von beispielsweise 20 bis 60 cm.

Die Dicke der Elemente kann ebenfalls in weiten Grenzen variiert werden. Bei der Anwendung als Sitzkissen, meist in quadratischer Form mit einer Kantenlänge von 35 bis 45 cm, werden mit Dicken von mehr als 2 cm die besten Ergebnisse erzielt. Bei der Anwendung als Matratze, Matratzeneinlage oder Matratzenauflage können auch Elemente geringere Dicke vorteilhaft sein.

Die erfindungsgemäßen Gelmassen haben die Eigenschaft, sich unter Druck zu deformierten, dabei den Druck zu verteilen, das heißt Druckspitzen zu erniedrigen, und nach dem Aufhören der deformierenden Kraft in ihren Ausgangszustand zurückzugehen. Diese Eigenschaft bewirkt, daß Elemente, die erfindungsgemäße Gelmassen enthalten, in der Lage sind, sich unter dem Druck einer darauf liegenden oder sitzenden Person so weit zu verformen, um eventuelle Druckwunden zu vermeiden oder vorhandene Wunden im Heilungsprozeß zu fördern.

Bauteile, die erfindungsgemäße Gelmassen enthalten, können in vielfältiger Weise angewendet werden, zum Beispiel als Gel-Polster in orthopädischen Schuhen und Sportschuhen, auf Fahrradsätteln, unter Reitsätteln, auf Rollstühlen und Krankenbetten, auf Sitzflächen, Rückenflächen, Kopflehnen und Armlehnen von Sitzmöbeln, Autositzen oder sonstigen Sitzen, auf Operations- oder medizinischen Untersuchungstischen oder in Inkubatoren.

Weiterhin können Bauteile beziehungsweise Elemente, die aus einer erfindungsgemäßen Gelmasse mit einer einseitigen Abdeckung oder Beschichtung bestehen und eine hohe Haftfähigkeit aufweisen, insbesondere auf Körperoberflächen von Menschen und Tieren zur Anwendung kommen, zum Beispiel als Auflagen auf Ellenbogen, Schienbeinen oder Fußoberflächen zur Vermeidung und Verminderung der Auswirkungen von Verletzungen, insbesondere beim Sport als Auflagen für kosmetische Masken, zum Beispiel Gesichtsmasken, als selbsthaftende Abdeckungen für Verbände im Augen- oder Ohrenbereich zum Zwecke der Befestigung; als Auflagen zur Unterstützung von erschlafftem Gewebe im Brustbereich, als Abpolsterung unter Pferdesätteln, an Prothesen oder an Windeln zur Verhinderung von Druckstellen. Die erfindungsgemäßen Gelmassen können für Prothesenlagerungen (Gel- oder PU-Liner, die über den Stumpf gezogen wurden, eingesetzt werden. Sie können weiterhin für Fahrradsättel und Schuheinlagen eingesetzt werden. Eine andere Anwendungsmöglichkeit ist in Armaturenbrettern, die mit einem "Soft-touch" ausgestattet werden sollen, gegeben. Hierzu werden Folien beziehungsweise Textilien mit dem erfindungsgemäßen Gel beschichtet.

Die erfindungsgemäßen Gelmassen auf Basis von Reaktionsprodukten aus Polyolen, Polyisocyanaten und pyrogen hergestellten Oxiden zeigen vorteilhafterweise eine signifikante Verbesserung der mechanischen Eigenschaften.

Durch den erfindungsgemäßen Zusatz von pyrogen hergestelltem Oxid wird die Klebrigkeit der Polyurethan-Gelmassen herabgesetzt.

Weiterhin weisen die erfindungsgemäßen Gelmassen eine geringere Dichte auf, wodurch für bestimmte Anwendungen Vorteile zu verzeichnen sind.

### Beispiel 1:

- Probe 1:: TechnoGel (aliphatisch) BTG 135 ohne AEROSIL
- Probe 2:: TechnoGel (aliphatisch) BTG 135 mit 3% AEROSIL R 202

Durch Einarbeitung und Dispergierung von 3 % AEROSIL R 202 in die Polyolkomponente erhöht sich die Zugfestigkeit um 66 % von 0,393 MPa auf 0,654 MPa, die Weiterreißfestigkeit um 27% von 3,0 N/mm auf 3,8 N/mm und die Shore A-Härte um 83 % von 6 auf 11. Die Bruchdehnung bleibt gleich. Desweiteren verringert sich geringfügig die Dichte bei der Probe mit AEROSIL R 202 im Vergleich zur Probe ohne AEROSIL R 202 um 3,2 % von 1059 kg/m3 auf 1025 kg/m³. Darüber hinaus wird die Klebrigkeit der Probe durch AEROSIL verringert, was beim Herausschneiden der Prüfkörper auffällt.

Die Prüfung der Zugfestigkeit erfolgte in Anlehnung nach DIN 53571 (Abweichung, vgl. Prüfprotokoll mit Prüfparameter). Die Prüfung der Weiterreißfestigkeit erfolgte in Anlehnung an DIN 53556. Die Prüfung der Store A Härte erfolgte nach DIN 53505. Die Prüfung der Rohdichte erfolgte nach DIN 53420.

### Beispiel 2:

- Probe 3:: TechnoGel (aliphatisch) BTG 130 ohne AEROSIL
- Probe 4:: TechnoGel (aliphatisch) BTG 130 mit 10% AEROSIL R 8200
- Probe 5:: TechnoGel (aliphatisch) BTG 133 ohne AEROSIL
- Probe 6:: TechnoGel (aliphatisch) BTG 132 mit 15 % AEROSIL R 8200

Durch Einarbeitung und Dispergierung von 10 % AEROSIL R 8200 (Probe 4) in die Polyolkomponente erhöht sich die Zugfestigkeit von 0,22 MPa auf 1,14 MPa, dies entspricht einer Erhöhung um 418 % im Vergleich zur Probe ohne AEROSIL (Probe 3). Die Shore A-Härte erhöht sich von 0 auf 25. Die Bruchdehnung verringert sich um 21 % von 602 % auf 476 %. Die Klebrigkeit verringert sich.

Durch Einarbeitung und Dispergierung von 15 % AEROSIL R 8200 in die Polyolkomponente erhöht sich die Zugfestigkeit um 917 % von 0,173 MPa (Probe 5) auf 1,76 MPa (Probe 6).

### Beispiel 3:

- Probe 7:: TechnoGel TG-21-6A (aromatisch) ohne AEROSIL
- Probe 8:: TechnoGel TG-3-21-6S2 (aromatisch) mit 3 % AEROSIL 150
- Probe 9:: TechnoGel TG-5-21-6S2 (aromatisch) mit 5 % AEROSIL 150

Durch Einarbeitung und Dispergierung von 3 % AEROSIL 150 in die Polyolkomponente erhöht sich die Zugfestigkeit um 70 % von 0,33 MPa (Probe 7) auf 0,56 MPa (Probe 8). Die Bruchdehnung erhöht sich um 37 % von 566 % auf 777 %.

Die Shore-A-Härte erhöht sich von 0 auf 1.

Durch Einarbeitung und Dispergierung von 5% AEROSIL 150 in die Polyolkomponente erhöht sich die Zugfestigkeit um 161% von 0,33 MPa (Probe 8) auf 0,86 MPa (vgl. Probe 9). Die Bruchdehnung erhöht sich um 30 % von 566 % auf 737 %. Die Shore-A-Härte erhöht sich von 0 auf 2.

Die Prüfung der Zugfestigkeit erfolgte nach DIN 53504. Die Prüfung der Shore-A-Härte erfolgte nach DIN 53505.

Die eingesetzten pyrogen hergestellten Oxide sind bekannte Oxide. Sie weisen die folgenden physikalisch-chemischen Kenndaten auf:

| **Eigenschaften** | **AEROSIL R 8200** |
|---|---|
| Verhalten gegenüber Wasser | hydrophob |
| Oberfläche nach BET m²/g | 160±25 |
| Stampfdichte g/l | ca. 140 |
| Trocknungsverlust ( 2 h bei 105°C) % | ≤ 0,5 |
| pH-Wert (4%ig in Wasser) | ≥ 5,5 |
| Kohlenstoffgehalt % | 2,0 - 4,0 |
| SiO₂ % | ≥ 99,8 |
| Fe₂O₃ % | ≤ 0,01 |
| TiO₂ % | ≤ 0,03 |
| HCl % | ≤ 0,025 |

| | | AEROSIL 150 |
|---|---|---|
| Verhalten gegenüber Wasser | | hydrophil |
| Oberfläche nach BET¹) | m²/g | 150±15 |
| Mittlere Größe der Primärteilchen | nm | 14 |
| Stampfdichte²) | g/l | ca. 50 |
| normale Werte verdichtete Ware (Zusatz "V") | g/l | ca. 120 |
| Trochnungsverlust ³) (2Stunden bei 105°C) bei Verlassen des Lieferwerks | % | < 0,5⁹⁾ |
| Glühverlust ⁴) ⁷) (2 Stunden bei 1000°C) | % | < 1 |
| pH-Wert ⁵) (in 4%iger wäßriger Dispersion) | | 3,6-4,3 |
| SiO₂⁸) | % | < 99,8 |
| Al₂O₃⁸) | % | < 0,05 |
| Fe₂O₃⁶) | % | < 0,003 |
| TiO₂⁶) | % | < 0,03 |
| HCl⁸)¹¹) | % | < 0,025 |
| Siebrückstand⁶) (nach Mocker, 45µm) | % | < 0,05 |
| Gebindegröße (netto)¹⁵) | kg | |

| | | |
|---|---|---|
| 1) in Anlehnung an DIN 66 131 | | |
| 2) in Anlehnung an DIN ISO 787/XI, JIS K 5101/18 (nicht gesiebt) | | |
| 3) in Anlehnung an DIN ISO 787/II, ASTM D 280, JIS K 5101/21 | | |
| 4) in Anlehnung an DIN 55 921, ASTM D 1208, JIS K 5101/23 | | |
| 5) in Anlehnung an DIN ISO 787/IX, ASTM D 1208, JIS K 5101/24 | | |
| 6) in Anlehnung an DIN ISO 787/XVIII, JIS 5101/20 | | |
| 7) bezogen auf die 2 Stunden bei 105°C getrocknete Substanz | | |
| 8) bezogen auf die 2 Stunden bei 1000° geglühte Substanz | | |
| 9) spezielle vor Feuchtigkeit schützende Verpackung 10) in Wasser: Ethanol 1:1 11) HCl-Gehalt ist Bestandteil des Glühverlustes 12) enthält ca 1% chemisch gebundenen Kohlenstoff 13) enthält ca 5% chemisch gebudenen Kohlenstoff 14) enthält ca. 2,5% chemisch gebundenen Kohlenstoff | | |
| 15) verdichtete Ware wird in Säcken zu 20 kg geliefert 16) wird für Pulverlacke als Aluminiumoxid CS angeboten | | |

| | | **AEROSIL** **R 202** |
|---|---|---|
| Verhalten gegenüber Wasse | m²/g | hydrophob |
| | | |
| Oberfläche nach BET¹⁾ | | 100 ± 20 |
| Mittlere Größe der Primärteilchen | nm | |
| Stampfdichte ²⁾ | | |
| normale Ware | g/l | ca. 50 |
| verdichtete Ware | g/l | ca. 90 |
| (Zusatz "V") | | |
| Trocknungsverlust 3) | | |
| (2 Stunden bei 105°C) | % | <0,5 |
| bei Verlassen des Lieferwerkes | | |
| Kohlenstoffgehalt | % | 3,5 - 5,0 |
| pH-Wert ⁴⁾ (in 4%iger wäßriger Dispersion) | | 4 - 6⁷⁾ |
| SiO₂⁵⁾ | % | > 99,8 |
| Al₂O₃⁵⁾ | % | < 0,05 |
| Fe₂O₃ | % | < 0,01 |
| TiO₂⁵⁾ | % | < 0,03 |
| HCl⁵⁾ | % | < 0,025 |
| Siebrückstand 6) (nach Mocker, 45µm) | % | - |
| Gebindegröße | kg | 10 |

| | | |
|---|---|---|
| 1) in Anlehnung an DIN 66131 | | |
| 2) in Anlehnung an DIN ISO 787/Xl, JIS K 5101/18 (nicht gelebt) | | |
| 3) in Anlehnung an DIN ISO 787/II, ASTM D 280, JIS K 5101/21 | | |
| 4) in Anlehnung an DIN ISO 787/IX, ASTM D 1208, JIS K 5101/24 | | |
| 5) bezogen auf die 2 Stunden bie ± 1000° geglühte Substanz | | |
| 6) in Anlehnung an DIN IAO 787/XVIII | | |
| 7) in Wasser: Methanol = 1:1 | | |

## Patentansprüche

1. Gelmassen auf Basis von Reaktionsprodukten aus Polyolen und Polyisocyanaten, **dadurch gekennzeichnet, daß** sie als Füllstoff mindestens ein pyrogen hergestelltes Oxid eines Metalls und/oder Metalloids enthalten.

2. Verfahren zur Herstellung der Gelmassen gemäß Anspruch 1, **dadurch gekennzeichnet, daß** man eine Mischung aus
a) einem oder mehreren Polyisocyanaten und
b) einer oder mehreren Polyolkomponenten und
c) mindestens einem pyrogen hergestellten Oxid eines Metalls oder Metalloids
gelieren läßt.

3. Verfahren zur Herstellung der Gelmassen nach Anspruch 2, **dadurch gekennzeichnet, daß** das Produckt aus Isocyanat-Funktionalität und Funktionalität der Polyolkomponente mindestens 5,2, vorzugsweise mindestens 6,5, insbesondere mindestens 7,5 beträgt.

4. Verfahren nach Anspruch 2, **dadurch gekennzeichnet, daß** die Polyolkomponente aus einem Gemisch aus
a) einem oder mehreren Polyolen mit Hydroxyzahlen unter 112 und
b) einem oder mehreren Polyolen mit Hydroxyzahlen im Bereich 112 bis 600 besteht,
wobei das Gewichtsverhältnis der Komponente a) zu Komponente b) zwischen 90:10 und 10:90 liegt, die Isocyanat-Kennzahl des Reaktionsgemisches im Bereich von 15 bis 59,81 liegt und das Produkt aus Isocyanat-Funktionalität und Funktionalität der Polyolkomponente mindestens 6,15 beträgt.

5. Verfahren nach Anspruch 2, **dadurch gekennzeichnet, daß** man eine Mischung aus
a) einem oder mehreren Polyisocyanaten und
b) einer Polyolkomponente, bestehend aus
- einem oder mehreren Polyolen (b₁) mit Hydroxyzahlen unter 112 und
- einem oder mehreren Polyolen (b₂) mit Hydroxyzahlen im Bereich 112 bis 600 und
c) gegebenenfalls einem Katalysator für die Reaktion zwischen Isocyanat- und Hydroxylgruppen und
d) gegebenenfalls aus der Polyurethanchemie an sich bekannten Füll- und/oder Zusatzstoffen,
wobei das Gewichtsverhältnis der Komponente (b₁) zu Komponente (b₂) zwischen 90:10 und 10:90 liegt, die Isocyanat-Kennzahl des Reaktionsgemisches im Bereich von 15 bis 59,81 liegt und das Produkt aus Isocyanat-Funktionalität und Funktionalität der Polyokomponente mindestens 6,15 beträgt, gelieren läßt.

6. Verfahren nach Anspruch 2, **dadurch gekennzeichnet, daß** die Polyolkomponente aus einem oder mehreren Polyolen mit einm Molekulargewicht zwischen 1000 und 12000 und einer OH-Zahl zwischen 20 und 112 bestehen, wobei das Produkt der Funktionalitäten der polyurethanbildenden Komponenten mindestens 5,2 beträgt, und die Isocyanat-Kennzahl zwischen 15 und 60 liegt.

7. Verfahren nach Anspruch 2, dadurch gekennzeichten, daß man als Isocyanate kann man solche der Formel
Q(NCO)ₙ
einsetzen, in der
n für 2 bis 4 steht und
Q einen aliphtischen Kohlenwasserstoffrest mit 8 bis 18 C-Atomen, einen cycloalithatischen Kohlenwasserstoffrest mit 4 bis 15 C-Atomen, eine aromatischen Kohlenwasserstoffrest mit 6 bis 15 C-Atomen oder einem araliphatischen Kohlenwasserstoffrest mit 8 bis 15 C-Atomen bedeutet.

8. Verwendung der Gelmassen nach Anspruch 1, gegebenenfalls mit einer Beschichtung, Abdeckung oder Unterfütterung, oder als Formteil.

## Claims

1. Gels based on reaction products from polyols and polyisocyanates, **characterized in that** they comprise, as filler, at least one pyrogenically prepared oxide of a metal and/or of a metalloid.

2. Process for preparing the gels according to Claim 1, **characterized in that** a mixture composed of
a) one or more polyisocyanates and
b) one or more polyol components and
c) at least one pyrogenically prepared oxide of a metal or of a metalloid
is gelled.

3. Process for preparing the gels according to Claim 2,
**characterized in that** the product of isocyanat functionality and functionality of the polyole component is at least 5.2, preferably at least 6.5, in particular at least 7.5.

4. Process according to Claim 2, **characterized in that** the polyol component is composed of a mixture of
a) one or more polyols with hydroxy values below 112 and
b) one or more polyols with hydroxy values in the range from 112 to 600,
where the ratio by weight of component a) to component b) is from 90:10 to 10:90, the isocyanate index of the reaction mixture is in the range from 15 to 59.81 and the product of isocyanate functionality and functionality of the polyol component is at least 6.15.

5. Process according to Claim 2, **characterized in that** a mixture composed of
a) one or more polyisocyanates and
b) a polyol component, composed of
- one or more polyols (b₁) with hydroxy values below 112 and
- one or more polyols (b₂) with hydroxy values in the range from 112 to 600 and
c) where appropriate a catalyst for the reaction between isocyanate groups and hydroxyl groups and
d) where appropriate fillers and/or additives, the fillers and/or additives being known per se from polyurethane chemistry,
where the ratio by weight of component (b₁) to component (b₂) is from 90:10 to 10:90, the isocyanate index of the reaction mixture is in the range from 15 to 59.81 and the product of isocyanate functionality and functionality of the polyol component is at least 6.15, is gelled.

6. Process according to Claim 2, **characterized in that** the polyol component is composed of one or more polyols with a molecular weight of from 1 000 to 12 000 and with an OH value of from 20 to 112, where the product of the functionalities of the polyurethane-forming components is at least 5.2, and the isocyanate index is from 15 to 60.

7. Process according to Claim 2, **characterized in that** the isocyanates used may comprise those of the formula
Q(NCO)ₙ
where
n is from 2 to 4 and
Q is an aliphatic hydrocarbon radical having from 8 to 18 carbon atoms, a cycloaliphatic hydrocarbon radical having from 4 to 15 carbon atoms, an aromatic hydrocarbon radical having from 6 to 15 carbon atoms, or an araliphatic hydrocarbon radical having from 8 to 15 carbon atoms.

8. Use of the gels according to Claim 1, where appropriate with a coating, protective covering, or underlay, or in the form of a moulding.

## Revendications

1. Masses de gel à base de produits de réaction entre des polyols et de polyisocyanates, **caractérisées en ce qu'**elles comprennent en tant que charge au moins un oxyde d'un métal et / ou métalloïde obtenu par pyrogénation.

2. Procédé pour la préparation des masses de gel selon la revendication 1, **caractérisé en ce qu'**on fait gélifier un mélange à partir de
a. un ou plusieurs polyisocyanates et
b. un ou plusieurs composés de polyol et
c. au moins un oxyde d'un métal ou métalloïde obtenu par pyrogénation.

3. Procédé pour la préparation des masses de gel selon la revendication 2, **caractérisé en ce que** le produit comporte des fonctionnalités isocyanate et des fonctionnalités des composés polyol est d'au moins 5,2, de préférence d'au moins 6,5, en particulier d'au moins 7,5.

4. Procédé selon la revendication 2, **caractérisé en ce que** les composés polyol sont obtenus à partir d'un mélange de :
a. un ou plusieurs polyols présentant un nombre d'hydroxy inférieur à 112 et,
b. un ou plusieurs polyols présentant un nombre d'hydroxy compris entre 112 et 600,
dans lequel le rapport pondéral des composés a) sur les composés b) est compris entre 90:10 et 10:90, le nombre d'isocyanate du mélange réactionnel est compris entre 15 et 59,81 et le produit comporte des fonctionnalités isocyanate et des fonctionnalités des composés polyol d'au moins 6,15.

5. Procédé selon la revendication 2, **caractérisé en ce qu'**on fait gélifier un mélange entre
a. un ou plusieurs isocyanates,
b. un composé polyol, constitué par
- un ou plusieurs polyols (b₁) présentant un nombre d'hydroxy inférieur à 112 et
- un ou plusieurs polyols (b₂) présentant un nombre d'hydroxy compris entre 112 et 600, et
c. éventuellement un catalyseur pour la réaction entre isocyanates et groupes hydroxy et
d. éventuellement des produits de charge et / ou d'addition connus en eux-mêmes dans la chimie des polyuréthanes,
dans lequel le rapport pondéral des composés (b₁) sur les composés (b₂) est compris entre 90:10 et 10:90, le nombre d'isocyanate du mélange réactionnel est compris entre 15 et 59,81 et le produit comporte des fonctionnalités isocyanate et des fonctionnalités des composés polyol est d'au moins 6,15.

6. Procédé selon la revendication 2, **caractérisé en ce que** les composés polyol comprennent un ou plusieurs polyols ayant une masse moléculaire comprise entre 1000 et 12000 et un nombre d'OH compris entre 20 et 112, dans lequel le produit des fonctionnalités des composés formant le polyuréthane est d'au moins 5,2 et le nombre d'isocyanate est compris entre 15 et 60.

7. Procédé selon la revendication 2 **caractérisé en ce qu'**en tant qu'isocyanate on peut ajouter un isocyanate de formule
Q (NCO) n
dans lequel n est de 2 à 5 et
Q est un reste d'hydrocarbure aliphatique ayant 8 à 18 atomes de carbone, un reste d'hydrocarbure cycloaliphatique ayant 4 à 15 atomes de carbone, un reste d'hydrocarbure aromatique ayant 6 à 15 atomes de carbone ou un reste d'hydrocarbure araliphatique ayant 8 à 15 atomes de carbone.

8. Utilisation des masses de gel selon la revendication 1, éventuellement avec un enrobage, un revêtement ou une sous-couche ou en tant que pièce de forme.
